# EUROPEAN PATENT SPECIFICATION

(11) **EP 2 631 088 B1**
(45) Date of publication and mention of the grant of the patent: **27.09.2017**
(21) Application number: 11833984.5
(22) Date of filing: 21.07.2011
(51) Int. Cl.: B60C 11/04, B60C 11/13

(54) **HEAVY LOAD PNEUMATIC TIRE**
SCHWERLASTFAHRZEUGREIFEN
PNEUMATIQUE POIDS LOURD

(30) Priority: 22.10.2010 JP 2010237902
(43) Date of publication of application: 28.08.2013
(73) Proprietor: Bridgestone Corporation, Tokyo 104-8340 (JP)
(72) Inventor: IWASAKI, Motohiro, Kodaira-shi Tokyo 187-8531 (JP)
(74) Representative: Lamb, Martin John Carstairs
(86) International application number: PCT/JP2011/004125
(87) International publication number: WO 2012/053137

(56) References cited:
- EP-A2- 0 661 182
- WO-A1-2010/041720
- WO-A1-2010/041720
- DE-A1-102009 003 562
- JP-A- 2 299 908
- JP-A- 4 185 509
- JP-A- 5 338 412
- JP-A- 8 169 211
- JP-A- 11 314 506

## Description

### TECHNICAL FIELD

The present invention relates to a pneumatic tire for heavy load mainly used for container transport and the like, and particularly to a pneumatic tire for heavy load provided, on the tread of the tire, with a plurality of circumferential grooves extending in a circumferential direction of the tread and having a depth of 35 mm or more from a surface of the tread.

### BACKGROUND ART

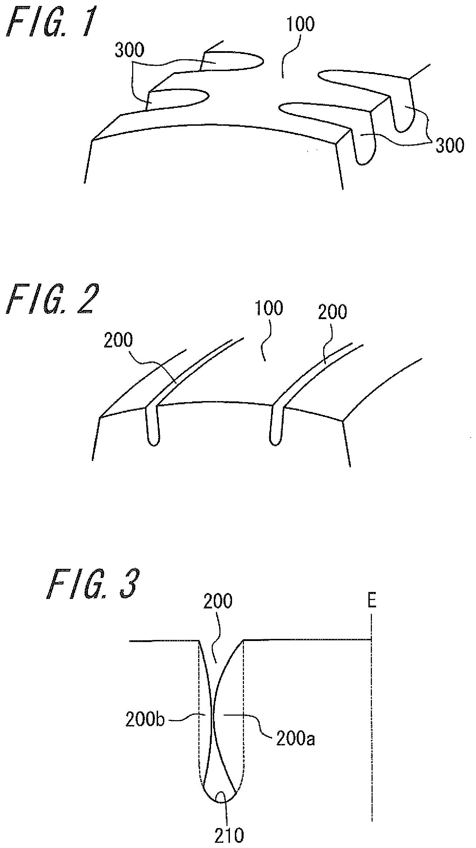

Since traction performance is required in tires for heavy load, in particular pneumatic tires for heavy load used for example in vehicles for transporting containers in airports, tires have predominantly been provided with a so-called lug pattern, in which width-direction grooves 300 extending in the tire width direction of a tread 100 and arranged at intervals in the tread circumferential direction, as illustrated in FIG. 1. When using a lug pattern, however, environmental problems occur while the vehicle is moving, such as noise and vehicle vibration. Therefore in recent years, pneumatic tires for heavy load with a so-called rib pattern have been developed, in which circumferential grooves 200 extending in the tire circumferential direction are arranged at intervals in the tread width direction, as illustrated in FIG. 2.

Such a rib pattern, however, is typically used in truck and bus tires and passenger vehicle tires. As compared to the above tires, pneumatic tires used in heavy load vehicles have thick treads and are thus characterized by deep grooves (35 mm or greater) and a large load. Therefore, when using the above rib pattern in a heavy load pneumatic tire, when the tire contacts the ground, the circumferential grooves 200 and the rubber by the tire equator E are crushed, and rubber 200a and 200b bulge from the groove walls, as illustrated in FIG. 3. This leads to the problem of a crack forming at the groove bottom 210 as a result of surface distortion concentrated at the groove bottom.

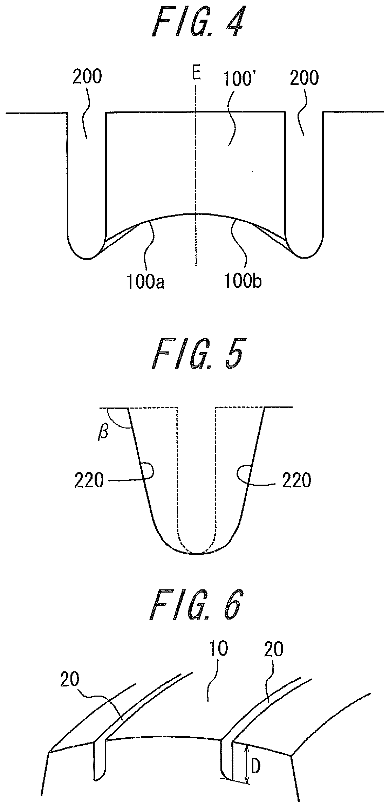

Furthermore, when a plurality of circumferential grooves are provided, and the crack occurring at the bottom of each circumferential groove spreads in the tire width direction, cracks 100a and 100b may connect, as illustrated in FIG. 4, causing the risk of a portion 100' of the tread rubber peeling and falling off (tread separation).

One way of suppressing the above cracks and tread separation is, for example, to increase the angle enclosed between the tread and the side wall of the circumferential groove, as disclosed in Patent Literature 1, thus increasing the groove opening width and decreasing the surface distortion at the groove bottom. However, as illustrated in FIG. 5, when the angle β between the tread and the wall 220 of the circumferential groove 200 is increased to enlarge the groove opening width, then the wear allowance decreases significantly as compared to when the groove opening width is small (such as the groove shape indicated by the dashed line), causing the problem that the wear life (the time until the tire can no longer be used due to wear) demanded by customers cannot be sufficiently guaranteed. DE102009003562 discloses tires for a heavy load according to the preamble of claim 1.

### CITATION LIST

### Patent Literature

PTL 1: JP5319029A

### SUMMARY OF INVENTION

It is an object of the present invention to suppress cracks occurring at the groove bottom and tread separation while suppressing noise and vehicle vibration during running of a pneumatic tire for heavy load, and furthermore to provide excellent wear life, by improving the cross-sectional shape of the circumferential grooves.

In order to achieve the above object, the inventor repeatedly examined a pneumatic tire for heavy load provided with a plurality of circumferential grooves with a large groove depth (a depth of 35 mm or more from a surface of the tread).

The inventor discovered that even at a large circumferential groove depth of 35 mm or more, forming the bottom of each circumferential groove as an arc and, when the bottom is divided into an inside and an outside in the tire width direction with a center of an opening of the circumferential groove as a boundary, setting the radius of curvature of the circumferential groove to be larger at the inside than at the outside in the tire width direction improves the shape of the groove bottom towards the tire equator and decreases surface distortion, the main cause of cracks, at the groove bottom. According to this structure, cracks occurring at the groove bottom and tread separation can therefore be suppressed, without requiring a larger groove width than a conventional circumferential groove, thus guaranteeing sufficient wear allowance and consequently improving the wear life.

The present invention has been conceived based on the above discovery, and a summary thereof follows.
(1) A pneumatic tire for heavy load provided, on a tread of the tire, with a plurality of circumferential grooves extending in a circumferential direction of the tread and having a depth of 35 mm or more from a surface of the tread, wherein when each circumferential groove is divided, within a cross section in a tire width direction, into an inside and an outside in the tire width direction with a center of an opening of the circumferential groove as a boundary, a radius of curvature of a groove bottom of the circumferential groove is larger at the inside than at the outside portion in the width direction, and characterised in that when each circumferential groove is divided, within the cross section in the tire width direction, into the inside and the outside in the tire width direction with the center of the opening of the circumferential groove as the boundary, subtracting an area of the circumferential groove from an area calculated as a product of the depth and a width of the circumferential groove yields an area at the outside in a range of 20% to 30% of an area at the inside in the width direction.
(2) The pneumatic tire according to (1), wherein a ratio of the radius of curvature of the groove bottom at the inside in the width direction to the depth of the circumferential groove is between 1:4 and 7:20, and a ratio of the radius of curvature of the groove bottom at the outside in the width direction to the depth of the circumferential groove is between 1:8 and 7:40.
(3) The pneumatic tire according to (1), wherein the circumferential grooves are provided in a range starting at 1/4 of a distance from a tread edge to a tire equator and extending to 3/4 of the distance.
(4) The pneumatic tire according to (1), wherein an angle between a side wall of the circumferential groove and the surface of the tread is in a range from 90° to 100°.
(5) The pneumatic tire according to (1), wherein as a proportion of the depth of the circumferential groove, a width of the circumferential groove is in a range from 37% to 50%.

According to the present invention, it is possible to provide a pneumatic tire for heavy load that can suppress cracks occurring at the groove bottom and tread separation while suppressing noise and vehicle vibration during running, and that has excellent wear resistance.

### BRIEF DESCRIPTION OF DRAWINGS

The present invention will be further described below with reference to the accompanying drawings, wherein:
FIG. 1 is a perspective view illustrating lug grooves provided on a conventional pneumatic tire for heavy load;
FIG. 2 is a cross-sectional perspective view illustrating circumferential grooves provided on a conventional pneumatic tire for heavy load;
FIG. 3 is a cross-sectional view illustrating a conventional pneumatic tire for heavy load in which rubber is crushed during contact with the ground and bulges from the groove walls of the circumferential grooves;
FIG. 4 is a cross-sectional view illustrating a conventional pneumatic tire for heavy load in which cracks occurring at the bottom of the circumferential grooves spread in the tire width direction and connect;
FIG. 5 is a cross-sectional view illustrating a conventional pneumatic tire for heavy load with a circumferential groove for which the angle enclosed between the tread and the wall of the circumferential groove is increased to enlarge the groove width;
FIG. 6 is a cross-sectional perspective view illustrating circumferential grooves provided on a pneumatic tire for heavy load according to the present invention;
FIG. 7 is a cross-sectional view illustrating the shape of the circumferential grooves provided on the pneumatic tire for heavy load according to the present invention;
FIG. 8 is a cross-sectional view illustrating the position in the tire width direction of the circumferential grooves provided on the pneumatic tire for heavy load according to the present invention; and
FIG. 9 is a cross-sectional view illustrating the value when a circumferential groove is divided, within a cross section in the tire width direction, into an inside and an outside in the tire width direction with the center of the opening of the circumferential groove as a boundary, and the area of the circumferential groove is subtracted from the area calculated as the product of the depth and the width of the circumferential groove.

### DESCRIPTION OF EMBODIMENTS

The structure and the reasons for the limitations of the present invention will now be described with reference to the drawings.

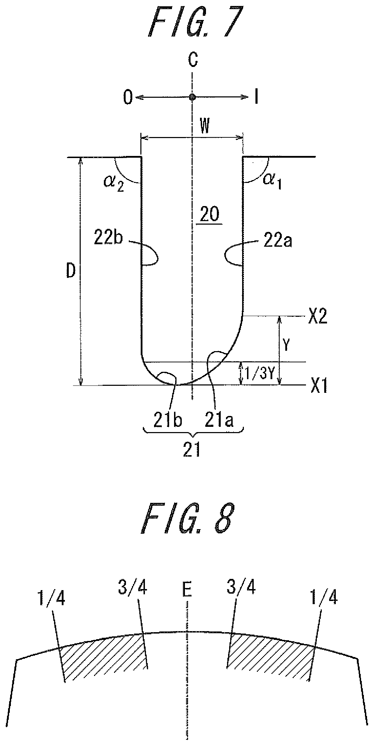

FIG. 6 is a cross sectional view in the width direction of a pneumatic tire for heavy load according to the present invention, illustrating a slice viewed obliquely from above, and FIG. 7 is a cross section in the tire width direction of a circumferential groove provided on the pneumatic tire for heavy load, illustrating the shape of the groove.

As illustrated in FIG. 6, the pneumatic tire for heavy load according to the present invention is provided, on a tread 10 of the tire, with a plurality (in FIG. 6, two) of circumferential grooves 20 extending in a circumferential direction of the tread 10 and having a depth D of 35 mm or more from the surface of the tread.

As illustrated in the cross section in the tire width direction in FIG. 7, when each circumferential groove 20 is divided into an inside (arrow I) and an outside (arrow O) in the tire width direction with a center C of the opening of the circumferential groove as a boundary, a radius of curvature of a groove bottom 21a at the inside is larger than a radius of curvature of a groove bottom 21b at the outside in the width direction.

By providing the above structure, i.e. by increasing the radius of curvature of the groove bottom closer to the tire equator (the inner groove bottom 21a), then even at a large depth D of 35 mm or more for each circumferential groove 20, distortion at the surface of the groove bottom 21 can be reduced, thereby suppressing cracks occurring at the groove bottom 21 and consequently suppressing tread separation as well. On the other hand, as compared to the inner groove bottom 21a, the outer groove bottom 21b has a lower level of distortion. Therefore, cracks do not occur in the groove bottom 21 even if the radius of curvature of the arc is not increased in the outer groove bottom 21b. Furthermore, as compared to conventional circumferential grooves, the groove width W can be decreased, thereby guaranteeing sufficient wear allowance, which allows for improvement of wear resistance as well.

Here, within the groove bottom 21 of each circumferential groove 20, the radii of curvature of the inner groove bottom 21a and of the outer groove bottom 21b in the width direction refer, as illustrated in FIG. 7, to the radii of curvature of the inner groove bottom 21a and of the outer groove bottom 21b in the width direction at a position that is 1/3 of a distance Y (1/3Y) along a tire radial direction from a deepest position X1 of the circumferential groove 20 to a boundary position X2 between the bottom 21 and a side 22a of the circumferential groove 20. Note that when the groove bottom 21 is in the shape of an arc, the groove bottom 21 may be a single arc or a plurality of arcs. In the case of a plurality of arcs, connecting portions are smooth. As illustrated in FIG. 7, the depth D of each circumferential groove 20 is the depth of the deepest portion of the circumferential groove 20. As further illustrated in FIG. 7, the width W of each circumferential groove 20 is the width at the opening of the groove 20.

At the bottom 21 of each circumferential groove 20, the ratio (Ra:D) of the radius of curvature (Ra) of the groove bottom inside portion 21a in the width direction to the depth (D) of the groove 20 is preferably between 1:4 and 7:20, and the ratio (Rb:D) of the radius of curvature (Rb) of the groove bottom outside portion 21b in the width direction to the depth (D) of the groove 20 is preferably between 1:8 and 7:40. If the ratios (Ra:D, Rb:D) between the radius of curvature R of the arc in the groove bottoms 21a and 21b and the depth D of the groove 20 are respectively less than the above ranges (1:4, 1:8), the radii of curvature (Ra, Rb) are too small for sufficient reduction of the surface distortion occurring at the groove bottom 21, thus leading to the risk of cracks occurring. On the other hand, if the ratios (Ra:D, Rb:D) between the radii of curvature (Ra, Rb) of the arc in the groove bottoms 21a and 21b and the depth D of the groove 20 respectively exceed the above ranges (7:20, 7:40), then even if surface distortion is reduced, the width W of the groove 21 becomes too large, thereby reducing wear allowance and leading to the risk of not obtaining sufficient wear life.

FIG. 8 illustrates the position in the tire width direction of the circumferential grooves 20 provided on the heavy load pneumatic tire.

As illustrated in FIG. 8, the circumferential grooves 20 are preferably provided in a range (hatched portions of the figure) starting at 1/4 of a distance from a tread edge to the tire equator and extending to 3/4 of the distance. The reason for this range is that the grooves 20 are too close to the tire equator if provided at a position exceeding 3/4 of the distance from the tread edge to the tire equator, thus making it easy for tread separation to occur when cracks form in the groove bottom 21. On the other hand, the grooves 20 are positioned too far to the outside in the tire width direction if provided at a position less than 1/4 the distance from the tread edge to the tire equator, thus causing uneven wear, in which only a corner of the tread edge wears, and leading to the risk of not being able to guarantee sufficient wear resistance.

As illustrated in FIG. 7, in each circumferential groove 20, the angles α₁ and α₂ between side walls 22a and 22b and the surface of the tread are preferably in a range from 90° to 100°, with 90° being most preferable. If the angles α₁ and α₂ are less than 90°, the angles are too small, thus making the groove bottom wider than at the tire surface and leading to the risk of the tire being difficult to remove from the mold during manufacture. On the other hand, if the angles α₁ and α₂ exceed 100°, the angles are too large, thereby increasing the width W of the groove 20, decreasing the wear allowance, and leading to the risk of not being able to obtain the desired wear life.

Note that the depth D of each circumferential groove 20 is 35 mm or more. The reason for setting the depth D of the groove to be 35 mm or more is that when the heavy load tire is, for example, used in vehicles for transporting containers, a depth of 35 mm or more is normally necessary to obtain wear life sufficient to satisfy users. When the groove depth D is less than 35 mm, it is difficult for cracks to form at the groove bottom.

Furthermore, as a proportion (W/D) of the depth of each circumferential groove 20, the width W of the groove 20 is preferably in a range from 37% to 50%. If the proportion (W/D) is less than 37%, the depth is too large, thus increasing the amount of rubber that bulges from the groove walls 22 and increasing the surface distortion at the bottom 21, which leads to the risk of cracks forming. On the other hand, if the proportion (W/D) exceeds 50%, the depth D is too small as compared to the groove width W, thus leading to the risk of not being able to obtain sufficient traction performance. Here, as illustrated in FIG. 7, the groove width W is the width W at the opening of the groove 20.

Two circumferential grooves 20 are preferably provided on the tread 10. The reason for this number is that fewer than two of the circumferential grooves 20 leads to the risk of not being able to guarantee sufficient resistance to heat buildup, whereas more than two circumferential grooves 20 prohibits sufficient wear allowance, thus decreasing the wear life, and causes the circumferential grooves 20 to be near each other, which makes tread separation occur more easily once a crack occurs in the groove bottom 21.

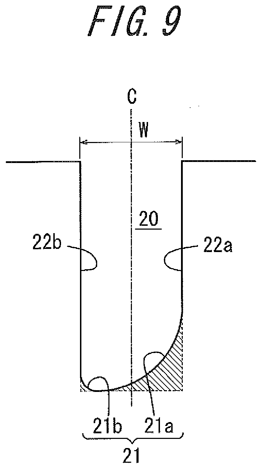

Furthermore, as illustrated by the cross section in the tire width direction of the circumferential groove 20 in FIG. 9, subtracting the area of the circumferential groove 20 from the area (W × D) calculated as the product of the groove width W and the depth D of the circumferential groove 20 yields a certain portion (hatched portion). When this hatched portion is divided into an inside and an outside in the tire width direction, the area of the hatched portion at the outside in the width direction is in a range of 20% to 30% of the area of the hatched portion at the inside in the width direction (area of hatched portion at outside in width direction / area of hatched portion at outside in width direction × 100 = 20 to 30). This range suppresses cracks occurring in the groove bottom 21 and tread separation, while also guaranteeing excellent wear resistance.

The circumferential grooves 20 do not close during contact with the ground. This is because unlike a pneumatic tire for automobiles or the like, the circumferential grooves 20 provided in the heavy load pneumatic tire according to the present invention have a large groove width W. Another reason is that the tread 10 includes a large amount of rubber, thereby achieving sufficient rigidity even though the grooves 20 are not obstructed during contact with the ground.

Note that the above disclosure is only an example of an embodiment of the present invention, and a variety of modifications may be made within the scope of the present invention.

### EXAMPLES

### (Inventive Example)

As an inventive example, a sample of a heavy load pneumatic tire was produced. The sample has a tire size of 16.00 R 25 and, as illustrated in FIG. 7, two circumferential grooves 20 in which, in a cross section in the tire width direction, when the groove bottom 21 is divided into an inside (arrow I) and an outside (arrow O) in the tire width direction with the center C of the opening of the circumferential groove as a boundary, as illustrated in FIG. 7, the radius of curvature (Ra: 15 mm) of the inner groove bottom 21a is larger than the radius of curvature (Rb: 7.5 mm) of the outer groove bottom 21b in the width direction.

For the sample, the depth D (mm) of the circumferential groove 20, the radii of curvature R of the arc of the inner groove bottom 21a and the outer groove bottom 21b in the width direction of the bottom 21 of the circumferential groove 20, the width W (mm) of the circumferential groove 20, and the ratio (R/D) of the radii of curvature of the groove bottom 21 to the depth D of the circumferential groove 20 are listed in Table 1.

### (Comparative Example)

As a comparative example, a sample of a heavy load pneumatic tire was produced under the same conditions as the inventive example, with the exception of providing two circumferential grooves in which, as illustrated in FIG. 2, in the cross section in the tire width direction, when the groove bottom 21 is divided into an inside and an outside in the tire width direction with the center C of the opening of the circumferential groove as a boundary, the radius of curvature of the groove bottom inside portion in the width direction is the same as the radius of curvature of the groove bottom outside portion in the width direction.

For the sample, the depth D (mm) of the circumferential groove 20, the radii of curvature of the arc of the inner groove bottom 21a and the outer groove bottom 21b in the width direction of the bottom 21 of the circumferential groove 20, the width W (mm) of the circumferential groove 20, and the ratio (R/D) of the radius of curvature R of the inner groove bottom 21a in the width direction of the groove bottom 21 to the depth D of the circumferential groove 20 are listed in Table 1.

### (Assessment)

The sample heavy load pneumatic tires of the inventive example and the comparative example were mounted on a TRA standard rim, and after applying an internal pressure of 1000 kPA, were mounted on a vehicle (container transport vehicle) and run for 2500 to 3500 hours. Assessment was performed by confirming whether cracks had occurred in the groove bottom 21 portion of the circumferential grooves 20 after 2500 hours, 3000 hours, and 3500 hours had elapsed. Table 1 shows the results.

**Table 1**

| | Conditions for circumferential grooves 20 | | | | | | Assessment | | |
|---|---|---|---|---|---|---|---|---|---|
| | Depth D (mm) | Radius of curvature R (mm) ofbottom | | Width W (mm) | Radius of curvature R of bottom/ depth D | | Occurrence of cracks | | |
| | | at inside (Ra) | at outside (Rb) | | at inside (Ra/D) | at outside (Rb/D) | 2500 hours of running | 3000 hours of running | 3500 hours of running |
| Inventive example | 50 | 15 | 7.5 | 20.5 | 0.3 | 0.15 | No | No | No |
| Comparative example | 50 | 5 | 5 | 10 | 0.1 | 0.1 | Yes | Yes | Yes |

As indicated by the results in Table 1, the example pneumatic tire according to the present invention can effectively suppress the occurrence of cracks at the groove bottom even after running for an extended time (2500 to 3500 hours).

### INDUSTRIAL APPLICABILITY

According to the present invention, it is possible to provide a heavy load pneumatic tire that can suppress cracks occurring at the groove bottom and tread separation while suppressing noise and vehicle vibration during running, and that has excellent wear life.

### REFERENCE SIGNS LIST

- 10, 100:: Tread
- 20, 200:: Circumferential groove
- 21, 210:: Groove bottom
- 22, 220:: Groove wall
- 23, 230:: Polygon block land portion
- 24, 240:: Polygon block row
- 300:: Lug groove
- E:: Tire equator
- C:: Circumferential groove opening center position
- D:: Groove depth
- W:: Groove width

## Claims

1. A pneumatic tire for heavy load provided, on a tread (10,100) of the tire, with a plurality of circumferential grooves (20,200) extending in a circumferential direction of the tread and having a depth of 35 mm or more from a surface of the tread, wherein
when each circumferential groove (20,200) is divided, within a cross section in a tire width direction, into an inside and an outside in the tire width direction with a center of an opening of the circumferential groove as a boundary, a radius of curvature of a groove bottom (21,210) of the circumferential groove (20,200) is larger at the inside than at the outside in the width direction, and **characterised in that** when each circumferential groove (20,200) is divided, within the cross section in the tire width direction, into the inside and the outside in the tire width direction with the center of the opening of the circumferential groove as the boundary, subtracting an area of the circumferential groove from an area calculated as a product of the depth (D) and a width (W) of the circumferential groove yields an area at the outside in a range of 20% to 30% of an area at the inside in the width direction.

2. The pneumatic tire according to claim 1, wherein a ratio of the radius of curvature of the groove bottom (21,210) at the inside in the width direction to the depth (D) of the circumferential groove is between 1:4 and 7:20, and a ratio of the radius of curvature of the groove bottom (21,210) at the outside in the width direction to the depth of the circumferential groove is between 1:8 and 7:40.

3. The pneumatic tire according to claim 1, wherein the circumferential grooves (20,200) are provided in a range starting at 1/4 of a distance from a tread edge to a tire equator (E) and extending to 3/4 of the distance.

4. The pneumatic tire according to claim 1, wherein an angle between a side wall of the circumferential groove (22,220) and the surface of the tread is in a range from 90° to 100°.

5. The pneumatic tire according to claim 1, wherein as a proportion of the depth (D) of the circumferential groove, a width (W) of the circumferential groove is in a range from 37% to 50%.

## Patentansprüche

1. Luftreifen für Schwerlastfahrzeug, an einer Lauffläche (10, 100) des Reifens versehen mit einer Vielzahl von Umfangsrillen (20, 200), welche sich in einer Umfangsrichtung der Lauffläche erstrecken und eine Tiefe von 35 mm oder darüber von einer Oberfläche der Lauffläche betrachtet besitzen, wobei
wenn jede Umfangsrille (20, 200) innerhalb eines Querschnitts in einer Reifenbreitenrichtung in eine Innenseite und eine Außenseite in der Reifenbreitenrichtung geteilt ist, mit einem Mittelpunkt einer Öffnung der Umfangsrille als eine Grenze, ein Krümmungsradius eines Rillengrundes (21, 210) der Umfangsrille (20, 200) an der Innenseite größer ist als an der Außenseite in der Breitenrichtung, und **dadurch gekennzeichnet, dass** wenn jede Umfangsrille (20, 200) innerhalb des Querschnitts in der Reifenbreitenrichtung in die Innenseite und die Außenseite in der Reifenbreitenrichtung geteilt ist, mit dem Mittelpunkt der Öffnung der Umfangsrille als der Grenze, das Subtrahieren eines Bereichs der Umfangsrille von einem Bereich, der als Produkt der Tiefe (D) und einer Breite (W) der Umfangsrille berechnet wird, einen Bereich an der Außenseite ergibt, der einen Bereich von 20 % bis 30 % eines Bereichs an der Innenseite in der Breitenrichtung beträgt.

2. Luftreifen nach Anspruch 1, bei welchem ein Verhältnis zwischen dem Krümmungsradius des Rillengrundes (21, 210) an der Innenseite in der Breitenrichtung und der Tiefe (D) der Umfangsrille zwischen 1 zu 4 und 7 zu 20 beträgt, und ein Verhältnis zwischen dem Krümmungsradius des Rillengrundes (21, 210) an der Außenseite in der Breitenrichtung und der Tiefe der Umfangsrille zwischen 1 zu 8 und 7 zu 40 beträgt.

3. Luftreifen nach Anspruch 1, bei welchem die Umfangsrillen (20, 200) in einem Bereich bereitgestellt werden, welcher bei 1/4 eines Abstandes von einer Laufflächenkante bis zu einem Reifenäquator (E) beginnt und sich über 3/4 des Abstandes erstreckt.

4. Luftreifen nach Anspruch 1, bei welchem ein Winkel zwischen einer Seitenwand der Umfangsrille (22, 220) und der Oberfläche der Lauffläche in einem Bereich von 90° bis 100° liegt.

5. Luftreifen nach Anspruch 1, bei welchem, als eine Proportion der Tiefe (D) der Umfangsrille betrachtet, eine Breite (W) der Umfangsrille in einem Bereich von 37 % bis 50 % liegt.

## Revendications

1. Pneumatique pour un poids lourd, lequel pneumatique est muni, sur une bande de roulement (10, 100) du pneu, d'une pluralité de gorges circonférentielles (20, 200) qui s'étendent dans une direction circonférentielle de la bande de roulement et qui présentent une profondeur de 35 mm ou plus par rapport à une surface de la bande de roulement, dans lequel :
lorsque chaque gorge circonférentielle (20, 200) est divisée, dans une section en coupe transversale dans une direction de largeur de pneu, en un intérieur et un extérieur dans la direction de largeur de pneu, un centre d'une ouverture de la gorge circonférentielle étant la frontière, un rayon de courbure d'un fond de gorge (21, 210) de la gorge circonférentielle (20, 200) est plus grand au niveau de l'intérieur qu'au niveau de l'extérieur dans la direction de largeur, et **caractérisé en ce que**, lorsque chaque gorge circonférentielle (20, 200) est divisée, dans la section en coupe transversale dans la direction de largeur de pneu, en l'intérieur et l'extérieur dans la direction de largeur de pneu, le centre de l'ouverture de la gorge circonférentielle étant la frontière, le fait de soustraire une aire de la gorge circonférentielle d'une aire qui est calculée en tant que produit de la profondeur (D) et d'une largeur (W) de la gorge circonférentielle donne une aire au niveau de l'extérieur dans une plage de 20 % à 30 % d'une aire au niveau de l'intérieur dans la direction de largeur.

2. Pneumatique selon la revendication 1, dans lequel un rapport du rayon de courbure du fond de gorge (21, 210) au niveau de l'intérieur dans la direction de largeur sur la profondeur (D) de la gorge circonférentielle est entre 1:4 et 7:20, et un rapport du rayon de courbure du fond de gorge (21, 210) au niveau de l'extérieur dans la direction de largeur sur la profondeur de la gorge circonférentielle est entre 1:8 et 7:40.

3. Pneumatique selon la revendication 1, dans lequel les gorges circonférentielles (20, 200) sont agencées dans une plage qui part de 1/4 d'une distance depuis un bord de bande de roulement jusqu'à un équateur de pneu (E) et qui s'étend sur 3/4 de la distance.

4. Pneumatique selon la revendication 1, dans lequel un angle entre une paroi latérale de la gorge circonférentielle (22, 220) et la surface de la bande de roulement est dans une plage de 90° à 100°.

5. Pneumatique selon la revendication 1, dans lequel, en tant que proportion de la profondeur (D) de la gorge circonférentielle, une largeur (W) de la gorge circonférentielle est dans une plage de 37 % à 50 %.
